# EUROPEAN PATENT APPLICATION

(11) **EP 2 429 233 A1**
(43) Date of publication of application: **14.03.2012**
(21) Application number: 10772122.7
(22) Date of filing: 07.05.2010
(51) Int. Cl.: H04W 28/04, H04L 1/16, H04W 36/08, H04W 36/30

(54) **COMMUNICATION DEVICE AND DATA RETRANSMISSION METHOD**

(30) Priority: 08.05.2009 JP 2009113686
(71) Applicant: Panasonic Corporation, Kadoma-shi Osaka 571-8501 (JP); NEC CASIO Mobile Communications, Ltd., Kawasaki-shi Kanagawa 211-8666 (JP)
(72) Inventor: KANEMOTO, Hideki, Osaka 540-3207 (JP); AIZAWA, Junichi, Oskaa 540-6207 (JP)
(74) Representative: Grünecker, Kinkeldey, Stockmair & Schwanhäusser
(86) International application number: PCT/JP2010/003139
(87) International publication number: WO 2010/128598

(57) **Abstract**

A communication apparatus is provided that can prevent decrease of transmission efficiency. In the apparatus, transmission processing section (107) transmits data, provides a non-transmission period on an intermittent basis, and stops transmission of the data in the non-transmission period. Reception processing section (103) receives a retransmission request for the data transmitted by transmission processing section (107). HARQ control section (105) performs retransmission processing of data requested to be retransmitted, wherein when a time of retransmission of the data requested to be retransmitted is in the non-transmission period, the HARQ control section stops the retransmission processing, and when the retransmission request is received again, the HARQ control section resumes the retransmission processing.

## Description

### Technical Field

The present invention relates to a communication apparatus and a data retransmission processing method, and, for example, relates to a communication apparatus and a data retransmission processing method for setting a gap period in compressed mode.

### Background Art

In the past, a mobile apparatus is known, which performs retransmission processing such as counting up a retransmission counter when the mobile apparatus cannot receive Ack (Acknowledgment) indicating successful reception in response to transmission using E-DPDCH (Enhanced Dedicated Physical Data Channel) (for example, Non-patent Literature 1).

When a mobile apparatus conducts handover from a source base station apparatus with which the mobile apparatus is currently communicating, to a target base station apparatus with which the mobile apparatus can communicate in the future, and the source base station apparatus and the target base station apparatus transmit signals in different frequencies, the mobile apparatus which is going to conduct the handover uses a communication method called "compressed mode" in order to measure the radio link quality of the signal transmitted from the target base station apparatus (for example, Patent Literature 1). The compressed mode is a method in which the base station apparatus intermittently provides a gap period to temporarily stop signal transmission/reception to the mobile apparatus that is going to conduct the handover. In the gap period, the mobile apparatus changes the reception frequency to a frequency which the target base station apparatus is compatible with, to measure the radio link quality with the target base station apparatus. Then, as a result of the measurement of the radio link quality, the mobile apparatus conducts handover based on conditions (e.g. the radio link quality of the signal transmitted by the target base station apparatus is better than that of the signal transmitted by the source base station apparatus), and the mobile apparatus switches to a reception frequency or communication method which the target base station apparatus is compatible with.

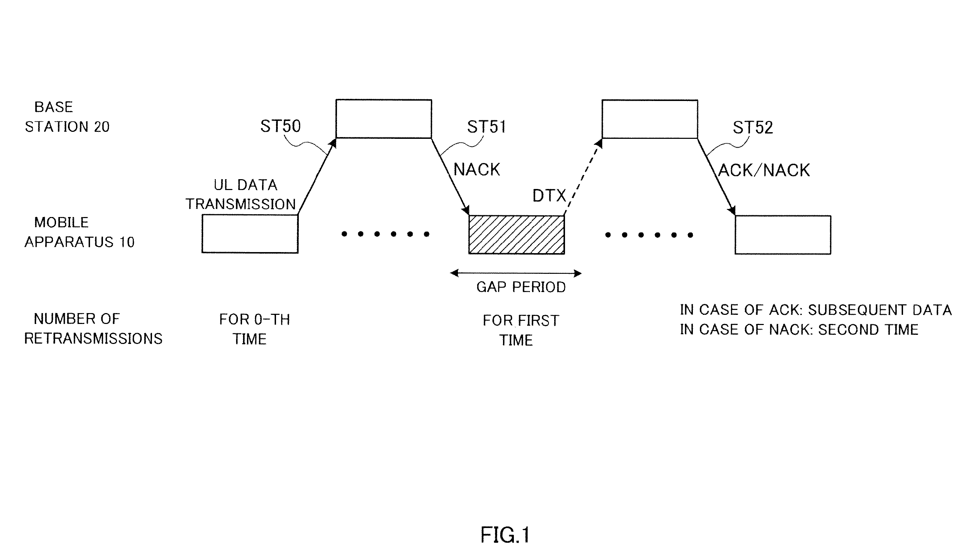

FIG.1 is a figure illustrating operation of a conventional mobile apparatus employing the compressed mode. As shown in FIG.1, first, mobile apparatus 10 transmits data to base station 20 using E-DPDCH (step ST 50). Base station 20 transmits Ack or Nack (Negative Acknowledgment), indicating whether or not base station 20 has received the E-DPDCH data without error, in an E-HICH (Enhanced Hybrid ARQ Indicator Channel) to mobile apparatus 10 (step ST 51). When mobile apparatus 10 receives the E-HICH data, and determines that the data is Nack, mobile apparatus 10 performs retransmission processing of the corresponding E-DPDCH data. When the retransmitted data retransmitted for the first time cannot be transmitted because the retransmitted data overlaps the gap period in compressed mode (DTX (Discontinuous Transmission)), mobile apparatus 10 receives E-HICH data from base station 20 (step ST 52). In this case, the state of the mobile apparatus not transmitting any response signal is called DTX. When the determination result of the E-HICH data is Ack, mobile apparatus 10 transmits subsequent data, and when the determination result of the E-HICH data is Nack, mobile apparatus 10 proceeds the retransmission processing to perform retransmission for a second time. The retransmission processing includes incrementing the number of retransmissions and changing of the content of retransmission such as setting of the amount of transmission of redundant bits. The retransmitted data is set so that the amount of transmission of the redundant bits varies according to the number of retransmissions.

### Citation List

### Patent Literature

PTL 1
   Japanese Patent Application Laid-Open No. 2005-110179

### Non-Patent Literature

NPL 1
   3GPP TS 25.321 V6.16.0 11.8.1.1.2 HARQ process

### Summary of Invention

### Technical Problem

In the conventional apparatus, however, the retransmitted E-DPDCH data is actually not transmitted when the retransmission of the E-DPDCH data overlaps the gap period in compressed mode. As a result, the conventional apparatus has a problem in that the retransmission processing is performed for the E-DPDCH data that is not actually transmitted, and this reduces transmission efficiency. More specifically, there is a problem in that retransmission is caused by RLC processing in a higher layer than HARQ processing, and this reduces transmission efficiency. In the conventional apparatus, the retransmission processing is performed regardless of whether the retransmission is actually performed or not, and the conventional apparatus may falsely determine that the apparatus has received Ack in response to retransmitted E-DPDCH data is not actually transmitted. In this case, subsequent transmission data is transmitted, and there is a problem in that the transferred data becomes inconsistent, which reduces transmission efficiency.

It is therefore an object of the present invention to provide a communication apparatus and a data retransmission processing method capable of preventing decrease of transmission efficiency.

### Solution to Problem

A communication apparatus according to the present invention employs a configuration to include: a transmission processing section that transmits data, provides a non-transmission period on an intermittent basis, and stops transmission of the data in the non-transmission period; a reception processing section that receives a retransmission request for the data transmitted by the transmission processing section; and a retransmission control section that performs retransmission processing of data requested to be retransmitted, stops the retransmission processing when a time of retransmission of the data requested to be retransmitted overlaps the non-transmission period, and resumes the retransmission processing when the retransmission request for the data is received again.

A data retransmission processing method for a communication apparatus that performs retransmission processing of data requested to be retransmitted, according to the present invention, includes the steps of: transmitting data, providing a non-transmission period on an intermittent basis, and stopping transmission of the data in the non-transmission period; receiving a retransmission request for the data transmitted; and when a time of retransmission of the data requested to be retransmitted overlaps the non-transmission period, stopping the retransmission processing, and, when the retransmission request for the data is received again, resuming the retransmission processing.

### Advantages of Invention

According to the present invention, decrease of transmission efficiency can be prevented.

### Brief Description of Drawings

FIG.1 is a figure illustrating a conventional retransmission processing method;
FIG.2 is a block diagram illustrating a configuration of a communication apparatus according to Embodiment 1 of the present invention;
FIG.3 is a figure illustrating a retransmission processing method according to Embodiment 1 of the present invention; and
FIG.4 is a figure illustrating a retransmission processing method according to Embodiment 2 of the present invention.

### Description of Embodiments

Embodiments of the present invention will be hereinafter explained in detail with reference to the drawings.

### (Embodiment 1)

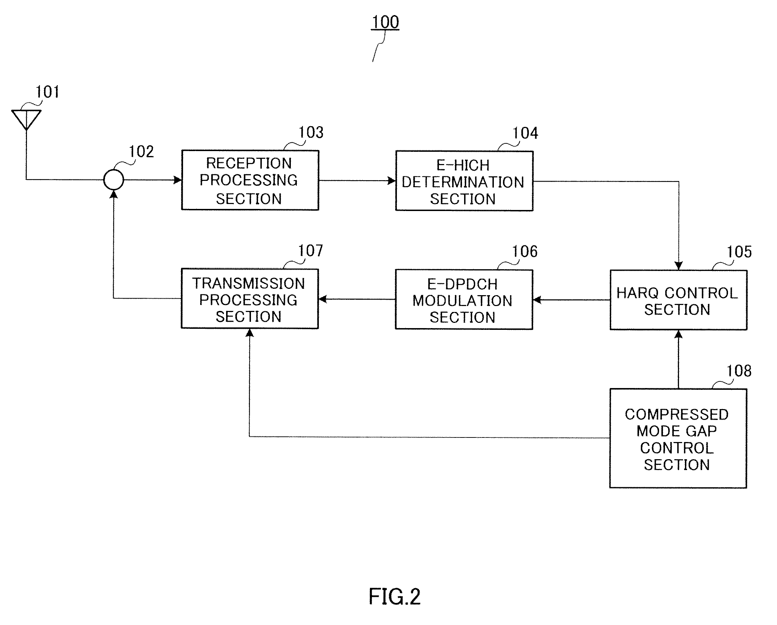

FIG.2 is a block diagram illustrating a configuration of communication apparatus 100 according to Embodiment 1 of the present invention. Communication apparatus 100 can be applied to a communication terminal apparatus such as a mobile phone using, for example, HSUPA (High Speed Uplink Packet Access).

Communication apparatus 100 mainly includes antenna 101, transmission/reception duplexer 102, reception processing section 103, E-HICH determination section 104, HARQ control section 105, E-DPDCH modulation section 106, transmission processing section 107, and compressed mode gap control section 108. Each configuration will be hereinafter explained in detail.

Antenna 101 receives an RF (high frequency) signal, and outputs the received RF signal to transmission/reception duplexer 102. In addition, antenna 101 transmits an RF signal received from transmission/reception duplexer 102.

Transmission/reception duplexer 102 switches the output of the RF signal received from antenna 101 to reception processing section 103 and the output of the RF signal received from transmission processing section 107 to antenna 101.

Reception processing section 103 down-converts and despreads the RF signal received from transmission/reception duplexer 102 from radio frequency to baseband frequency, thereby converting the RF signal into a baseband signal. Then, reception processing section 103 outputs the baseband signal to E-HICH determination section 104.

E-HICH determination section 104 decodes E-HICH data from the baseband signal received from reception processing section 103, and determines whether the decoded result is Ack indicating successful reception or Nack indicating failed reception. Then, E-HICH determination section 104 outputs the determination result to HARQ control section 105.

HARQ control section 105 controls E-DPDCH modulation section 106 based on the determination result received from E-HICH determination section 104. More specifically, when HARQ control section 105 receives the determination result of Ack from E-HICH determination section 104, HARQ control section 105 controls E-DPDCH modulation section 106 so as to transmit subsequent data for the first time. On the other hand, when HARQ control section 105 receives the determination result of Nack from E-HICH determination section 104, HARQ control section 105 counts the number of retransmissions according to retransmission request, and controls E-DPDCH modulation section 106 so as to perform the retransmission processing. When HARQ control section 105 receives a signal indicating a gap period (non-transmission period) from compressed mode gap control section 108, HARQ control section 105 stores the E-DPDCH transmission overlapping the gap period to result in DTX, cancels counting up the number of retransmissions, and controls E-DPDCH modulation section 106 to stop the retransmission processing. Then, when HARQ control section 105 receives the determination result of Nack from E-HICH determination section 104 again, HARQ control section 105 counts up the number of retransmissions of the E-DPDCH transmission stored, and controls E-DPDCH modulation section 106 to perform the retransmission processing, thus resuming the retransmission processing. In this case, when HARQ control section 105 receives the determination result of Nack again, and receives the signal indicating the gap period from compressed mode gap control section 108 again, HARQ control section 105 cancels counting up the number of retransmissions, and controls E-DPDCH modulation section 106 to stop the retransmission processing. In other words, HARQ control section 105 performs control to perform retransmission at a time not overlapping the gap period.

E-DPDCH modulation section 106 generates a baseband E-DPDCH modulation signal based on the control of HARQ control section 105. More specifically, when E-DPDCH modulation section 106 is controlled by HARQ control section 105 to perform subsequent data transmission, E-DPDCH modulation section 106 generates an E-DPDCH modulation signal by modulating subsequent data according to a predetermined modulation method. When E-DPDCH modulation section 106 is controlled by HARQ control section 105 to perform retransmission processing, E-DPDCH modulation section 106 generates an E-DPDCH modulation signal by modulating the retransmitted data subjected to the retransmission processing, according to the predetermined modulation method. Then, E-DPDCH modulation section 106 outputs the generated E-DPDCH modulation signal to transmission processing section 107. When E-DPDCH modulation section 106 is controlled by HARQ control section 105 to stop the retransmission processing, E-DPDCH modulation section 106 stops the retransmission processing. The retransmission processing method performed when the retransmission overlaps the gap period will be explained later.

Transmission processing section 107 multiplies the E-DPDCH modulation signal received from E-DPDCH modulation section 106 by a spread code, and up-converts the E-DPDCH modulation signal from baseband to RF, thus converting the signal into an RF signal. Then, transmission processing section 107 outputs the RF signal to transmission/reception duplexer 102. When transmission processing section 107 receives a signal indicating a gap period from compressed mode gap control section 108, transmission processing section 107 performs control so that the data is not transmitted in the gap period.

Compressed mode gap control section 108 controls the gap period in compressed mode, and outputs a signal indicating the gap period during a time of the gap period to HARQ control section 105 and transmission processing section 107.

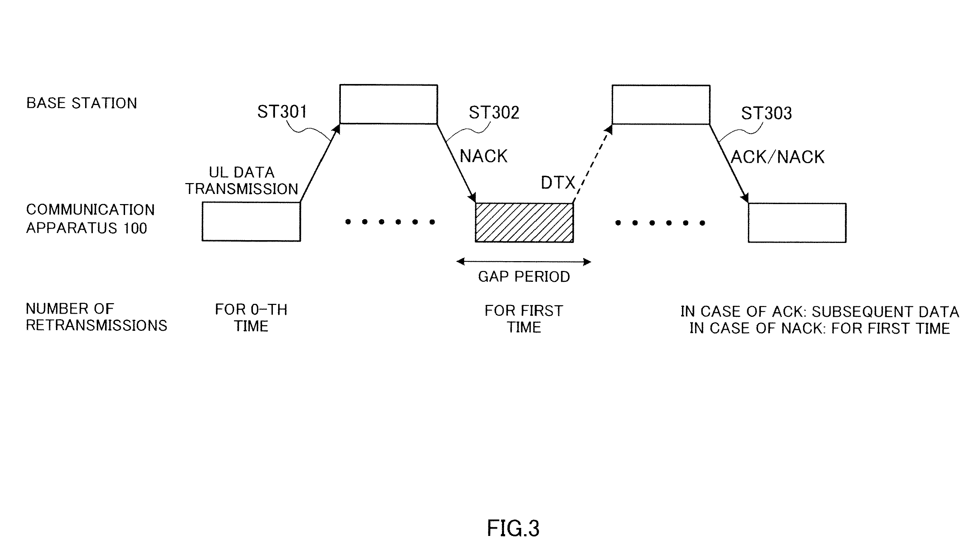

Subsequently, the retransmission processing method performed when the time of the retransmission overlaps the gap period will be explained with reference to FIG.3. FIG.3 is a figure explaining a retransmission processing method.

As shown in FIG.3, first, communication apparatus 100 transmits data using an E-DPDCH to the base station (step ST 301). When the base station receives the E-DPDCH data without any error, the base station transmits Ack in the E-HICH to communication apparatus 100. When the E-DPDCH data include error, the base station transmits Nack in the E-HICH to communication apparatus 100 (step ST 302). Then, communication apparatus 100 receives the E-HICH data. When the decoded result of the received E-HICH data is determined to be Nack by E-HICH determination section 104, HARQ control section 105 performs control to perform retransmission processing of the corresponding E-DPDCH data. When the retransmission for the first time overlaps a gap period in compressed mode, and communication apparatus 100 fails to transmit the data (DTX), communication apparatus 100 receives E-HICH data transmitted from the base station (step ST 303). When the determination result of the E-HICH is determined to be Ack by E-HICH determination section 104, HARQ control section 105 performs control to transmit subsequent data for the first time. When the determination result of the E-HICH is determined to be Nack, HARQ control section 105 performs control so that the retransmission processing for the first time is performed, instead of the retransmission processing for a second time (i.e. the retransmission for the first time scheduled to be retransmitted is performed).

As described above, according to the present embodiment, when the time of the retransmission overlaps the gap period in compressed mode, the retransmission processing stops, and the retransmission processing is not performed. When Nack is received again, the retransmission processing is resumed. Therefore, this prevents inconsistency in the data and prevents decrease of transmission efficiency.

### (Embodiment 2)

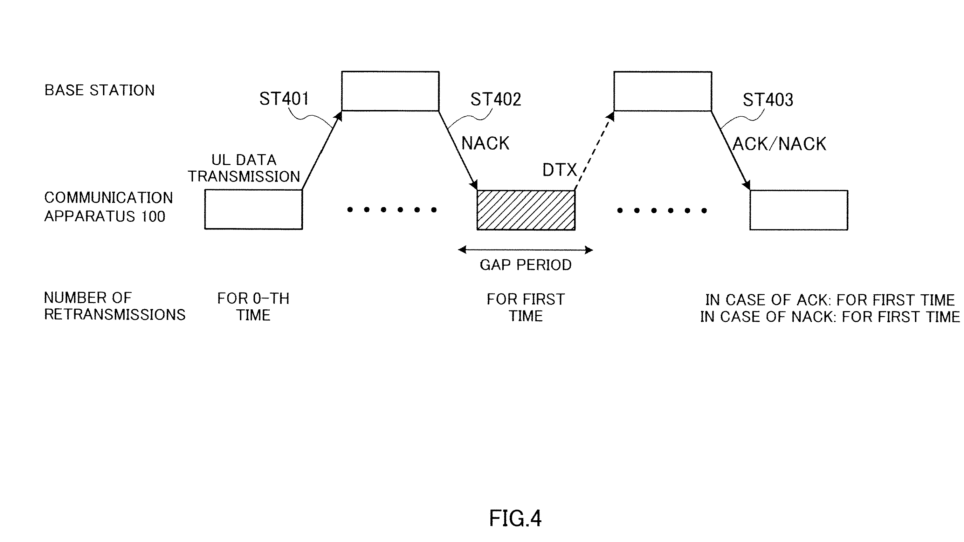

FIG.4 is a figure illustrating a retransmission processing method according to Embodiment 2 of the present invention. In the present embodiment, the configuration of the communication apparatus is the same as that of FIG.2, and description thereof is omitted. In the present embodiment, the reference numerals of FIG.2 are used for explanation.

As shown in FIG.4, first, communication apparatus 100 transmits data using an E-DPDCH to the base station (step ST 401). When the base station receives the E-DPDCH data without any error, the base station transmits Ack in the E-HICH to communication apparatus 100. When the E-DPDCH data include error, the base station transmits Nack in the E-HICH to communication apparatus 100 (step ST 402). Then, communication apparatus 100 receives the E-HICH data. When the decoded result of the received E-HICH data is determined to be Nack by E-HICH determination section 104, HARQ control section 105 performs control to perform retransmission processing of the corresponding E-DPDCH data. When the retransmission for the first time overlaps a gap period in compressed mode, and communication apparatus 100 fails to transmit the data (DTX), communication apparatus 100 receives E-HICH data transmitted from the base station (step ST 403). When the determination result of the E-HICH is determined to be either Ack or Nack by E-HICH determination section 104, HARQ control section 105 performs control so that the retransmission processing for the first time is performed instead of the retransmission processing for a second time (i.e., the retransmission for the first time scheduled to be retransmitted is performed).

As described above, according to the present embodiment, the effects of above Embodiment 1 are obtained, and in addition, when Ack is received after the time of the retransmission overlaps the gap period in compressed mode, the retransmission processing is resumed and the data is retransmitted, thereby reliably reducing errors with received data at the communicating party. In addition, according to the present embodiment, when the E-HICH data is received with error (e.g. when Ack is falsely determined to be received due to reception error even though the base station transmits Nack), the present embodiment can prevent erroneous data transmission caused by the reception error of the E-HICH data, and the retransmitted data can be reliably transmitted.

In above Embodiments 1 and 2, data is transmitted in the E-DPDCH and the E-HICH. However, the present invention is not limited thereto. Any channel may be used to transmit data. In above Embodiments 1 and 2, when the time of the retransmission overlaps the gap period in compressed mode, the retransmission processing stops. However, the present invention is not limited thereto. The present invention can be applied to any method that performs retransmission processing in a communication method having a predetermined non-transmission period instead of the gap period in compressed mode.

The disclosure of Japanese Patent Application No. 2009-113686, filed on May 8, 2009, including the specification, drawings and abstract, is incorporated herein by reference in its entirety.

### Industrial Applicability

For example, the present invention is suitable for use for a communication apparatus and data retransmission processing method for setting a gap period in compressed mode.

## Claims

1. A communication apparatus comprising:
a transmission processing section that transmits data, provides a non-transmission period on an intermittent basis, and stops transmission of the data in the non-transmission period;
a reception processing section that receives a retransmission request for the data transmitted by the transmission processing section; and
a retransmission control section that performs retransmission processing of data requested to be retransmitted, stops the retransmission processing when a time of retransmission of the data requested to be retransmitted overlaps the non-transmission period, and resumes the retransmission processing when the retransmission request for the data is received again.

2. The communication apparatus according to claim 1, wherein:
the reception processing section receives, in addition to the retransmission request, a notification indicating successful reception of the data transmitted from the transmission processing section; and
when the retransmission control section receives the notification indicating the successful reception of the data after the retransmission processing stops, the retransmission control section processes next data, following the data, for first transmission.

3. The communication apparatus according to claim 1, wherein:
the reception processing section receives not only the retransmission request but also a notification indicating successful reception of the data transmitted from the transmission processing section; and
when the retransmission control section receives the notification indicating the successful reception of the data after the retransmission processing stops, the retransmission control section resumes the retransmission processing.

4. The communication apparatus according to claim 1, wherein:
the transmission processing section provides a gap period in compressed mode, which serves as a non-transmission period in which communication with a communicating cell stops, in order to measure reception quality of a handover target candidate using a different frequency from the communicating cell, and stops transmission of the data in the gap period; and
when a time of retransmission overlaps the gap period, the retransmission control section stops the retransmission processing.

5. The communication apparatus according to claim 1, wherein a time of retransmission of the data requested to be retransmitted overlaps the non-transmission period, the retransmission control section stops at least one of setting of an amount of transmission of a redundant bit or counting up of the number of retransmissions serving as the retransmission processing.

6. A data retransmission processing method for a communication apparatus that performs retransmission processing of data requested to be retransmitted, the method comprising the steps of:
transmitting data, providing a non-transmission period on an intermittent basis, and stopping transmission of the data in the non-transmission period;
receiving a retransmission request for the data transmitted; and
when a time of retransmission of the data requested to be retransmitted overlaps the non-transmission period, stopping the retransmission processing, and, when the retransmission request for the data is received again, resuming the retransmission processing.
